(19) Europäisches Patentamt / European Patent Office / Office européen des brevets

(11) **EP 4 163 866 A1**

(12) **DEMANDE DE BREVET EUROPEEN**

(43) Date de publication:
**12.04.2023   Bulletin 2023/15**

(21) Numéro de dépôt: **22192934.2**

(22) Date de dépôt: **30.08.2022**

(51) Classification Internationale des Brevets (IPC):
**G06T 5/00** (2006.01)

(52) Classification Coopérative des Brevets (CPC):
**G06T 5/00**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **31.08.2021   FR 2109051**

(71) Demandeur: **Commissariat à l'énergie atomique et aux énergies alternatives**
**75015 Paris (FR)**

(72) Inventeurs:
• **OUERFELLI, Mohamed**
  **91191 Gif-sur-Yvette Cedex (FR)**
• **TAMAAZOUSTI, Mohamed**
  **91191 Gif-sur-Yvette cedex (FR)**
• **RIVASSEAU, Vincent**
  **91140 Villebon sur Yvette (FR)**

(74) Mandataire: **Bonnet, Michel**
  **Cabinet Bonnet**
  **93, rue Réaumur**
  **75002 Paris (FR)**

(54)   **PROCÉDÉ, PROGRAMME D'ORDINATEUR ET DISPOSITIF DE TRAITEMENT D'IMAGES PAR EXTRACTION DE COMPOSANTE(S) PRINCIPALE(S) D'UNE REPRÉSENTATION D'IMAGES**

(57)   Ce procédé (100) d'extraction d'une composante principale d'une représentation d'images à N dimensions, N≥3, comporte l'exécution d'une méthode de convergence itérative (106) sur un tenseur à N dimensions formé par la représentation d'images et présentant des longueurs vectorielles $n_i$, $1 \le i \le N$, dans ses N dimensions respectives. Plus précisément, la méthode de convergence est exécutée $n_{init}$ fois sur le tenseur en partant de $n_{init}$ composantes tensorielles initiales et en appliquant au moins $n_{iter}$ itérations pour l'obtention de $n_{init}$ composantes tensorielles finales. La composante principale est extraite par sélection (108) d'une des $n_{init}$ composantes tensorielles finales. Les dimensions du tenseur sont analysées (104) pour obtenir une valeur V représentative de sa taille à partir des N longueurs vectorielles ni. Le nombre $n_{iter}$ est déterminé (104) pour qu'il soit supérieur ou égal à V et polynomial en V.

[Fig. 2]

Figure 2

EP 4 163 866 A1

## Description

La présente invention concerne un procédé de traitement d'images par extraction d'au moins une composante principale d'une représentation d'images à N dimensions, où $N \geq 3$. Elle concerne également un programme d'ordinateur et un dispositif correspondants.

Un tel procédé est généralement mis en œuvre pour extraire un signal pertinent, i.e. ladite au moins une composante principale, dans des données d'imagerie complexes corrompues par du bruit. L'objectif peut donc être d'analyser les données complexes en termes de caractéristiques pertinentes à extraire, d'opérer une réduction dimensionnelle des données ou de tout simplement réaliser un débruitage.

Par « représentation d'images à N dimensions, où $N \geq 3$ », on entend une représentation à $N \geq 3$ dimensions, pouvant éventuellement inclure au moins une dimension temporelle et/ou au moins une dimension modale d'acquisition (certaines techniques d'imagerie, telles que l'imagerie par résonance magnétique en imagerie médicale par exemple, ou encore les techniques d'acquisition à capteurs multiples, permettant plusieurs modalités d'acquisition), dans laquelle au moins deux des dimensions sont spatiales de manière à inclure au moins une image bidimensionnelle par représentation. Ainsi la dernière dimension, troisième ou supérieure, peut être spatiale (plusieurs acquisitions successives de dimension N-1 décalées dans une dimension de l'espace), temporelle (plusieurs acquisitions successives de dimension N-1 décalées dans le temps) ou modale (plusieurs acquisitions successives de dimension N-1 selon différentes modalités d'imagerie). Une telle représentation d'images est donc représentable sous forme tensorielle.

L'invention s'applique ainsi plus particulièrement à un procédé de traitement d'images par extraction d'au moins une composante principale d'une représentation d'images à N dimensions, où $N \geq 3$, comportant une étape d'enregistrement de la représentation d'images sous la forme d'un tenseur à N dimensions présentant des longueurs vectorielles $n_i$, où $1 \leq i \leq N$, dans ses N dimensions respectives.

Une représentation d'images au sens de la présente invention, c'est-à-dire représentable sous une forme tensorielle, peut donc inclure au plus simple une vidéo à N = 3 dimensions, dans laquelle les deux premières dimensions sont spatiales et la troisième temporelle. Mais elle peut aussi en variante inclure une image tridimensionnelle, une image avec couleurs, des données d'imagerie plus complexes à trois dimensions spatiales, une dimension temporelle et au moins une dimension modale, ou même plus généralement des données issues de capteurs multiples, des données d'industrie chimique ou biologique telles que celles par exemple évoquées dans l'article de Sun et al, intitulé « Opportunities in tensorial data analytics for chemical and biological manufacturing processes », publié dans Computer & Chemical Engineering, volume 143, le 5 décembre 2020, etc.

Une représentation d'images au sens de la présente invention peut également inclure des résultats d'analyse statistique d'un ensemble de données multivaluées complexes, par exemple issus d'une analyse de réseaux sociaux ou biologiques par modèles bayésiens de facteurs latents. Les moments observables d'ordres inférieurs issus d'une telle analyse statistique sont représentables quantitativement et visuellement sous la forme d'une telle représentation d'images et donc sous forme tensorielle, comme par exemple expliqué dans l'article de Anandkumar et al, intitulé « Tensor decompositions for learning latent variable models », publié dans Journal of Machine Learning Research, volume 15 (août 2014), pages 2773-2832.

Une représentation d'images au sens de la présente invention peut également inclure des paramètres de modélisation de données d'observation (images, sons, ...) en apprentissage profond (de l'anglais « deep learning ») tels que les poids d'une couche de convolution d'un réseau de neurones convolutif ou profond. Ces paramètres sont eux aussi représentables quantitativement sous la forme d'une telle représentation d'images et donc sous forme tensorielle, comme par exemple expliqué dans l'article de Wang et al, intitulé « CPAC-Conv: CP-decomposition to approximately compress convolutional layers in deep learning », publié sur Internet dans arXiv preprint arXiv:2005.13746v1, le 28 mai 2020.

Une représentation d'images au sens de la présente invention peut également inclure des paramètres de modélisation multimodale de données d'observation (images, sons, ...), par exemple en reconnaissance faciale, par analyse multilinéaire d'un ensemble d'observations combinant de multiples modes d'acquisition. Les résultats de cette analyse sont eux aussi représentables quantitativement sous la forme d'une telle représentation d'images et donc sous forme tensorielle, comme par exemple expliqué dans l'article de Alex et al, intitulé « Multilinear analysis of image ensembles: TensorFaces », publié dans Proceedings of European Conférence on Computer Vision, pages 447-460, le 29 avril 2002.

Une représentation d'images au sens de la présente invention peut également inclure des paramètres de modélisation d'un problème de récupération, par au moins une antenne de télécommunication, de signaux radiofréquence supposés vectoriels d'un nombre prédéfini d'utilisateurs. Ces paramètres sont eux aussi représentables quantitativement sous la forme d'une telle représentation d'images et donc sous forme tensorielle, comme par exemple expliqué dans l'article de Decurninge et al, intitulé « Tensor-based modulation for unsourced massive random access », publié dans IEEE Wireless Communications Letters, volume 10(3), pages 552-556, le 11 novembre 2020. Autant de composantes principales sont alors à extraire que d'antenne(s) réceptrice(s) formant le cas échéant une méta-antenne.

Dans l'article précité de Anandkumar et al, l'extraction de composante(s) principale(s) se fait par décomposition tensorielle selon une méthode de la puissance itérée sur le tenseur. Mais cette méthode de convergence par itérations successives est très sensible au bruit tensoriel et ne converge pas correctement dès qu'il devient important. Les auteurs ont par ailleurs considéré que la convergence est soumise à une forte corrélation entre la ou les composante(s) principale(s) recherchée(s) et l'initialisation de la décomposition tensorielle. Dans ces conditions, la convergence est rapide et le nombre $n_{iter}$ d'itérations est logarithmique en fonction d'une valeur V représentative de la taille du tenseur qui peut par exemple être considérée comme égale à $\max_i(n_i)$. Notamment, $n_{iter} \leq \ln(V)$, $\ln(V)$ constituant alors une limite théorique maximale du nombre d'itérations à envisager pour la méthode de la puissance itérée. Cette limite théorique est établie et justifiée mathématiquement dans l'article de Wang & Anandkumar, intitulé « Online and differentially-private tensor decomposition », publié dans Proceedings of 29th Conférence on Neural Information Processing Systems, Barcelone (ES) le 15 décembre 2016. Mais dès que les conditions précitées ne sont pas réunies, ce qui est en réalité souvent le cas, la méthode enseignée dans le document Anandkumar et al ou Wang & Anandkumar ne fonctionne pas.

Dans l'article précité de Wang et al, l'extraction de composante(s) principale(s) se fait par décomposition tensorielle selon une méthode CANDECOMP/PARAFAC (CP) qui consiste à approcher le tenseur par une somme de tenseurs de rang 1. Cela revient à ramener la méthode d'extraction à une recherche de composante(s) principale(s) dans des structures matricielles. Bien évidemment, la méthode de la puissance itérée fonctionne très bien en contexte matriciel, mais l'approximation faite au départ éloigne la méthode d'une solution optimale prenant bien en compte la structure tensorielle des données. Cette méthode est alors elle aussi très sensible au bruit tensoriel de données difficiles.

Dans l'article précité de Alex et al, l'extraction de composante(s) principale(s) se fait par une méthode connue sous le nom de décomposition de Tucker qui consiste à approcher le tenseur initial par un tenseur noyau de dimensions plus petites relié à des matrices fibres. Cette décomposition est principalement utilisée pour la compression de tenseur en analyse de données par modèles de facteurs latents lorsque les relations entre ces facteurs latents sont connues. Elle fonctionne très bien en théorie dans des données non bruitées, mais voit ses performances s'effondrer en conditions réelles d'acquisition de données parfois fortement bruitées.

Bien d'autres méthodes sont enseignées dans l'état de la technique pour traiter l'extraction de composante(s) principale(s) dans une structure tensorielle, telles que par exemple les méthodes de dépliage (de l'anglais « unfolding methods ») ou les méthodes par homotopie (de l'anglais « homotopy based methods »), mais elles échouent toutes en pratique dans des contextes de données difficiles, i.e. fortement bruitées, ou au mieux requièrent des temps de traitement évoluant exponentiellement avec la taille des données.

Il peut ainsi être souhaité de prévoir un procédé de traitement d'images par extraction de composante(s) principale(s) qui permette de s'affranchir d'au moins une partie des problèmes et contraintes précités.

Il est donc proposé un procédé de traitement d'images par extraction d'au moins une composante principale d'une représentation d'images à N dimensions, où $N \geq 3$, comportant :

- un enregistrement de la représentation d'images sous la forme d'un tenseur à N dimensions présentant des longueurs vectorielles $n_i$, où $1 \leq i \leq N$, dans ses N dimensions respectives ;

- une génération aléatoire de $n_{init}$ composantes tensorielles initiales, où $n_{init} \geq 2$ ;

- $n_{init}$ exécutions d'une méthode de convergence par itérations successives sur le tenseur en partant respectivement des $n_{init}$ composantes tensorielles initiales et en appliquant au moins $n_{iter}$ itérations, où $n_{iter} \geq 2$, pour l'obtention par convergence de $n_{init}$ composantes tensorielles finales ;

- une extraction de ladite au moins une composante principale par sélection de l'une des $n_{init}$ composantes tensorielles finales ;

comportant en outre :

- une analyse des dimensions du tenseur pour obtenir une valeur V représentative de sa taille à partir des N longueurs vectorielles ni ;

- une détermination du nombre $n_{iter}$ d'itérations de telle sorte qu'il soit supérieur ou égal à V et soit polynomial en V.

De façon connue en soi, définir que $n_{iter}$ est polynomial en V signifie qu'il existe une fonction polynomiale F, c'est-à-dire du type $F(X) = \Sigma_j a_j X^j$, telle que $n_{iter} = F[V]$.

Ainsi, en augmentant singulièrement le nombre $n_{iter}$ d'itérations dans chaque exécution de la méthode de convergence choisie, il a été remarqué que de façon surprenante, même lorsque aucune convergence ne semble s'amorcer avant la limite de $\ln(V)$ itérations, c'est-à-dire lorsque la corrélation entre la ou les composante(s) principale(s) recherchée(s) et l'initialisation de la décomposition tensorielle n'est pas assurée et semble ne pas vouloir apparaître à cause d'un bruit élevé, celle-ci finit par se produire en un nombre d'itérations supérieur ou égal à V et polynomial en V. Des résultats expérimentaux montrent même qu'elle se produit soudainement, au bout d'un certain nombre d'itérations supérieur à la limite théorique ln(V) imposée par l'état de la technique, avec une amélioration remarquable par rapport aux algorithmes de l'état de la technique. Ce résultat surprenant et contre-intuitif illustre une certaine déambulation dans l'espace des composantes tensorielles avant une convergence finalement tardive mais soudaine et de probabilité élevée vers la composante principale recherchée. Ainsi, la convergence du procédé proposé s'avère puissante et statistiquement indépendante de l'initialisation. Ce nouveau mécanisme de convergence observé expérimentalement est radicalement différent de ce qui est généralement enseigné par la compréhension théorique des méthodes de convergence connues, telles que la méthode de la puissance itérée tensorielle par exemple, et d'autant plus surprenant qu'il révèle finalement une participation importante du bruit dans la récupération du signal, ce bruit déclenchant et assistant la convergence.

En outre, il peut être démontré que sa complexité est elle aussi polynomiale en V. En d'autres termes, une convergence peut être assurée moyennant un nombre suffisant d'itérations dans la méthode de convergence choisie, en tout cas nettement supérieur à la limite théorique connue et généralement admise, sans que cela ne nécessite une complexité évoluant exponentiellement avec la taille des données.

De façon optionnelle mais avantageuse, un procédé de traitement d'images selon l'invention peut en outre comporter une détermination du nombre $n_{init}$ d'exécutions de telle sorte qu'il soit supérieur ou égal à V et soit polynomial en V. On atteint ainsi une probabilité proche de 1 d'avoir au moins une initialisation pour laquelle le nouveau mécanisme de convergence précité s'enclenche effectivement.

De façon optionnelle également,

$$V = \max_i(n_i)$$ de sorte que :

- $$n_{iter} \geq \max_i(n_i)$$ et est polynomial en $$\max_i(n_i)$$ ;

- $$n_{init} \geq \max_i(n_i)$$ et est polynomial en $$\max_i(n_i)$$.

De façon optionnelle également :

- $$n_{iter} = \alpha_{iter} \times \max_i(n_i)$$ avec $\alpha_{iter} \geq 1$ ;

- $$n_{init} = \alpha_{init} \times \max_i(n_i)$$ avec $\alpha_{init} \geq 1$.

De façon optionnelle également,

$$n_{init} \leq 10 \times \max_i(n_i)$$.

De façon optionnelle également, la sélection se fait sur un critère de maximum de vraisemblance et comporte une présélection, parmi les $n_{init}$ composantes tensorielles finales, de $n'_{init}$ composantes tensorielles finales dont la convergence par exécution de la méthode de convergence par itérations successives présente une variation inférieure à un seuil prédéterminé sur un nombre prédéterminé de dernières itérations.

De façon optionnelle également, plusieurs composantes principales recherchées sont extraites de la façon suivante :

- à chacune des $n_{init}$ exécutions de la méthode de convergence par itérations successives :

  • présélection de la composante tensorielle finale si et seulement si la convergence qui a permis de l'obtenir par exécution de la méthode de convergence par itérations successives présente une variation inférieure à un seuil prédéterminé sur un nombre prédéterminé de dernières itérations,

  • mise à jour du tenseur par soustraction de la composante tensorielle finale présélectionnée affectée d'un coefficient relatif à un produit scalaire entre elle et le tenseur, ou maintien du tenseur tel quel si la composante tensorielle finale n'est pas présélectionnée ;

- à l'issue des $n_{init}$ exécutions de la méthode de convergence par itérations successives, extraction des composantes principales recherchées par sélection de plusieurs parmi les composantes tensorielles finales présélectionnées.

De façon optionnelle également, la méthode de convergence par itérations successives est l'une de l'ensemble constitué d'une méthode de la puissance itérée et d'une méthode de descente de gradient à pas variable.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de traitement d'images selon l'invention, lorsque ledit programme est exécuté sur un ordinateur.

Il est également proposé un dispositif de traitement d'images par extraction d'au moins une composante principale d'une représentation d'images à N dimensions, où $N \geq 3$, comportant :

- des moyens d'acquisition et d'enregistrement de la représentation d'images sous la forme d'un tenseur à N dimensions présentant des longueurs vectoriel-

les $n_i$, où $1 \leq i \leq N$, dans ses N dimensions respectives ;

- un processeur programmé pour :

    • engendrer aléatoirement $n_{init}$ composantes tensorielles initiales, où $n_{init} \geq 2$,

    • exécuter $n_{init}$ fois une méthode de convergence par itérations successives sur le tenseur en partant respectivement des $n_{init}$ composantes tensorielles initiales et en appliquant au moins $n_{iter}$ itérations, où $n_{iter} \geq 2$, pour l'obtention par convergence de $n_{init}$ composantes tensorielles finales,

    • extraire ladite au moins une composante principale par sélection de l'une des $n_{init}$ composantes tensorielles finales ;

le processeur étant en outre programmé pour :

- analyser les dimensions du tenseur pour obtenir une valeur V représentative de sa taille à partir des N longueurs vectorielles ni ;

- déterminer le nombre $n_{iter}$ d'itérations de telle sorte qu'il soit supérieur ou égal à V et soit polynomial en V.

L'invention sera mieux comprise à l'aide de la description qui va suivre, donnée uniquement à titre d'exemple et faite en se référant aux dessins annexés dans lesquels :

[Fig.1] la figure 1 représente schématiquement la structure générale d'un dispositif de traitement d'images selon un mode de réalisation de l'invention,

[Fig.2] la figure 2 illustre les étapes successives d'un premier procédé de traitement d'images selon un premier mode de réalisation de l'invention, par exemple exécuté par un processeur du dispositif de la figure 1,

[Fig.3] la figure 3 illustre les étapes successives d'un deuxième procédé de traitement d'images selon un deuxième mode de réalisation de l'invention, par exemple exécuté par un processeur du dispositif de la figure 1,

[Fig.4] la figure 4 illustre les étapes successives d'un troisième procédé de traitement d'images selon un troisième mode de réalisation de l'invention, par exemple exécuté par un processeur du dispositif de la figure 1,

[Fig.5A] la figure 5A illustre un premier diagramme comparatif de convergences de plusieurs méthodes d'extraction d'une composante principale d'un tenseur en fonction d'un rapport signal sur bruit pour une première taille tensorielle,

[Fig.5B] la figure 5B illustre un deuxième diagramme comparatif de convergences de plusieurs méthodes d'extraction d'une composante principale d'un tenseur en fonction d'un rapport signal sur bruit pour une deuxième taille tensorielle,

[Fig.5C] la figure 5C illustre un troisième diagramme comparatif de convergences de plusieurs méthodes d'extraction d'une composante principale d'un tenseur en fonction d'un rapport signal sur bruit pour une troisième taille tensorielle,

[Fig.5D] la figure 5D illustre un quatrième diagramme comparatif de convergences de plusieurs méthodes d'extraction d'une composante principale d'un tenseur en fonction d'un rapport signal sur bruit pour une quatrième taille tensorielle,

[Fig.6] la figure 6 illustre un diagramme de convergence d'une méthode de convergence mise en œuvre par un procédé de traitement d'images selon la présente invention.

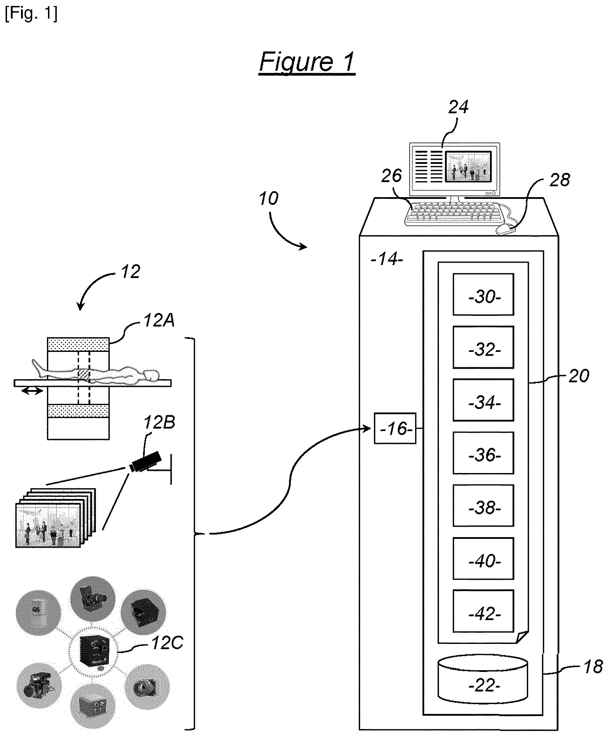

Le dispositif 10 de traitement d'images représenté schématiquement sur la figure 1 n'est qu'un exemple non limitatif de dispositif convenant pour une mise en œuvre d'un procédé de traitement d'images par extraction d'au moins une composante principale d'une représentation d'images à N dimensions, où $N \geq 3$, selon la présente invention.

Il est par exemple associé à un appareil 12 de capture de représentations d'images à au moins trois dimensions, tel qu'une installation d'imagerie IRM 12A (pour des représentations d'images à trois dimensions spatiales), un système de vidéosurveillance 12B (pour des représentations d'images à deux dimensions spatiales et une dimension temporelle), une installation à capteurs multiples 12C (pour des représentations d'images multimodales), ou tout autre appareil apte à fournir des représentations d'images à N dimensions, où $N \geq 3$, au sens de la présente invention, c'est-à-dire tel que cela a été détaillé précédemment.

Plus généralement et concrètement, chaque représentation d'images pouvant être fournie par l'appareil de capture 12 comporte au moins trois dimensions parmi lesquelles :

- au moins deux de trois dimensions spatiales possibles,

- une dimension temporelle, et

- une dimension modale,

étant entendu que les moments observables d'ordres inférieurs issus d'une analyse statistique, les poids d'une couche de convolution d'un réseau de neurones, ou les paramètres de modélisation multimodale de données d'observation par analyse multilinéaire d'un ensemble d'observations combinant de multiples modes d'acquisition sont autant de données pouvant former une représentation d'images à au moins trois dimensions au sens de la présente invention.

Le dispositif 10 de traitement d'images comporte un dispositif informatique 14 programmé pour l'acquisition de représentations d'images fournies par l'appareil de capture 12 et pour leur traitement. Ce dispositif informatique 14 présente une unité centrale de traitement 16, telle qu'un microprocesseur conçu recevoir les signaux de représentations d'images à au moins trois dimensions fournis par l'appareil de capture 12, et une mémoire 18 dans laquelle est enregistré un programme d'ordinateur 20. La mémoire 18 comporte en outre une zone 22 de stockage de données traitées ou à traiter par l'unité de traitement 16 sur exécution du programme 20.

Le dispositif 10 de traitement d'images comporte en outre optionnellement des éléments d'interactivité avec un utilisateur. Ces éléments incluent par exemple un écran d'affichage 24, un clavier 26 et un dispositif de pointage pour ordinateur tel qu'une souris 28.

Le programme d'ordinateur 20 comporte tout d'abord des instructions 30 pour acquérir une représentation d'images provenant de l'appareil de capture 12 et pour l'enregistrer en mémoire 18 dans la zone de stockage 22 sous la forme d'un tenseur T à $N \geq 3$ dimensions présentant des longueurs vectorielles $n_i$, où $1 \leq i \leq N$, dans ses N dimensions respectives.

Le programme d'ordinateur 20 comporte en outre des instructions 32 pour analyser les dimensions du tenseur T et en déduire une détermination d'un nombre entier $n_{init} \geq 2$ d'initialisations aléatoire à réaliser ainsi que d'un nombre entier $n_{iter} \geq 2$ d'itérations à envisager pour l'exécution d'une méthode de convergence par itérations successives sur le tenseur T visant à en extraire au moins une composante principale. Plus précisément, l'analyse consiste à extraire une valeur V représentative de la taille du tenseur T, telle que par exemple une valeur statistique obtenue à partir des N longueurs vectorielles $n_i$, ou plus simplement une valeur minimale ou maximale de ces longueurs vectorielles. Une valeur représentative particulièrement pertinente est V = $\max_i(n_i)$ et c'est celle qui sera retenue dans la suite de la description.

A partir de cette valeur représentative $V = \max_i(n_i)$, $n_{iter}$ est choisi de telle sorte que $n_{iter} \geq \max_i(n_i)$ et soit polynomial en $\max_i(n_i)$. Par exemple, $n_{iter}$ peut être choisi de telle sorte qu'il soit linéaire en $\max_i(n_i)$, c'est-à-dire qu'il existe un nombre entier strictement positif $\alpha_{iter}$ tel que $n_{iter} = \alpha_{iter} \times \max_i(n_i)$. Avantageusement, $n_{init}$ peut être choisi sur des critères similaires, tels que $n_{init} \geq \max_i(n_i)$ et polynomial en $\max_i(n_i)$. Par exemple, $n_{init}$ peut être choisi de telle sorte qu'il soit lui aussi linéaire en $\max_i(n_i)$, c'est-à-dire qu'il existe un nombre entier strictement positif $\alpha_{init}$ tel que $n_{init} = \alpha_{init} \times \max_i(n_i)$. Les paramètres $\alpha_{iter}$ et $\alpha_{init}$ peuvent être prédéterminés dans les instructions 32. Ils peuvent également être renseignés interactivement à l'aide des éléments 24, 26 et 28.

Le programme d'ordinateur 20 comporte en outre des instructions 34 pour engendrer aléatoirement $n_{init}$ composantes tensorielles initiales. Chacune d'elles, notée par exemple $X_{j,0}$, où $1 \leq j \leq n_{init}$, résulte du produit tensoriel (noté $\otimes$) de N vecteurs initiaux $v_{i,j,0}$, où $1 \leq i \leq N$, définis aléatoirement et de longueurs vectorielles respectives $n_i$ :

$$X_{j,0} = \overset{N}{\underset{i=1}{\otimes}} v_{i,j,0}.$$

Le programme d'ordinateur 20 comporte en outre des instructions 36 pour exécuter $n_{init}$ fois une méthode de convergence par itérations successives sur le tenseur T en partant respectivement des $n_{init}$ composantes tensorielles initiales $X_{j,0}$ et en appliquant au plus $n_{iter}$ itérations, pour l'obtention par convergence de $n_{init}$ composantes tensorielles finales $X_{j,f}$. La méthode de convergence par itérations successives est par exemple une méthode de la puissance itérée appliquée au tenseur T ou une méthode de descente de gradient, notamment une descente de gradient à pas variable.

Le programme d'ordinateur 20 comporte en outre des instructions 38 pour extraire au moins une composante principale par sélection d'au moins l'une des $n_{init}$ composantes tensorielles finales $X_{j,f}$ fournies par exécution des instructions 36. Cette sélection se fait optionnellement mais avantageusement sur un critère de maximum de vraisemblance. De façon optionnelle également, cette sélection comporte une présélection, parmi les $n_{init}$ composantes tensorielles finales $X_{j,f}$, de $n'_{init}$ composantes tensorielles finales, où $n'_{init} < n_{init}$, dont la convergence par exécution de la méthode de convergence par itérations successives (i.e. par exécution du programme d'ordinateur 36) présente une variation inférieure à un seuil prédéterminé sur un nombre prédéterminé de dernières itérations.

Le programme d'ordinateur 20 comporte optionnellement des instructions 40 pour une mise à jour du tenseur T lorsque plusieurs composantes principales doivent être successivement extraites.

Dans ce cas, les instructions 34, 36 et 38 peuvent être séquentiellement exécutées plusieurs fois, autant de fois que de composantes principales souhaitées, et les instructions 40 sont définies pour mettre à jour le tenseur T entre chaque répétition de la séquence d'instructions 34, 36, 38 par soustraction de la composante principale précédemment sélectionnée affectée d'un coefficient relatif à un produit scalaire entre elle et le tenseur T.

En variante, à chacune des $n_{init}$ exécutions de la méthode de convergence réalisées par les instructions 36 :

- les instructions 38 peuvent être sollicitées pour réaliser la présélection éventuelle de la composante tensorielle finale $X_{j,f}$ obtenue, et

- les instructions 40 peuvent être sollicitées pour réaliser la mise à jour du tenseur T si cette composante tensorielle finale $X_{j,f}$ est effectivement présélectionnée,

avant de passer à l'exécution suivante.

Cette variante astucieuse est moins consommatrice de calculs puisqu'elle ne nécessite pas de répétition de la séquence d'instructions 34, 36, 38 en intégrant la portion de présélection des instructions 38 et la mise à jour des instructions 40 dans l'exécution des instructions 36.

Enfin, le programme d'ordinateur 20 comporte des instructions 42 pour un pilotage global des instructions 32 à 40 définies précédemment. Notamment ce pilotage peut varier selon que :

- une seule composante principale est à extraire du tenseur T : dans ce cas, les instructions de pilotage 42 sont définies pour exécuter séquentiellement une seule fois les instructions 30 à 38, sans exécution des instructions 40,

- plusieurs composantes principales sont à extraire du tenseur T : dans ce cas, les instructions de pilotage 42 sont définies pour :

  • exécuter séquentiellement une seule fois les instructions 30 et 32, puis séquentiellement autant de fois que de composantes principales à extraire les instructions 34 à 40, ou

  • exécuter séquentiellement une seule fois les instructions 30 à 38 en intégrant la portion de présélection des instructions 38 et la mise à jour des instructions 40 dans l'exécution des instructions 36.

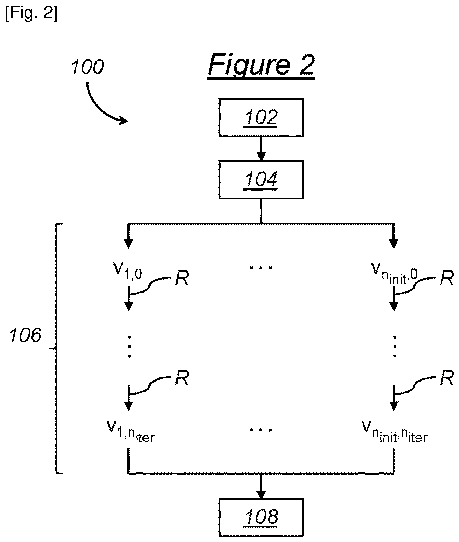

En référence à la figure 2, un procédé 100 de traitement d'images par extraction d'au moins une composante principale d'une représentation d'images à N dimensions, où N ≥ 3, mis en œuvre par le dispositif 10 de la figure 1 grâce à l'exécution des instructions 30 à 42 va à présent être détaillé selon un premier mode de réalisation.

Pour simplifier les notations et équations à suivre, il va être supposé que N = 3 et que $n_1 = n_2 = n_3 = n$. En outre, le procédé 100 vise à extraire une seule composante principale d'une représentation d'images tridimensionnelle. Il s'agit d'une mise en œuvre simplifiée de la présente invention.

Au cours d'une première étape 102, l'unité centrale de traitement 16 exécute les instructions 30 telles que pilotées par les instructions 42 pour acquérir une représentation d'images tridimensionnelle fournie par l'appareil de capture 12 et l'enregistrer en mémoire 22 sous la forme d'un tenseur T à trois dimensions présentant une longueur vectorielle commune n dans ses trois dimensions respectives.

Au cours d'une étape 104 suivante, l'unité centrale de traitement 16 exécute les instructions 32 telles que pilotées par les instructions 42 pour déterminer les valeurs de $n_{init}$ et $n_{iter}$. La longueur vectorielle commune n des trois dimensions du tenseur T est une valeur représentative de sa taille, de sorte que $n_{init}$ et $n_{iter}$ sont déterminés en fonction de n, notamment supérieurs ou égaux à n et polynomiaux en n, avantageusement égaux à $\alpha n$ avec par exemple $\alpha = 10$.

Au cours d'une étape 106 suivante, l'unité centrale de traitement 16 exécute les instructions 34 telles que pilotées par les instructions 42 pour engendrer aléatoirement $n_{init}$ vecteurs initiaux $v_{j,0}$, où $1 \leq j \leq n_{init}$. Pour chacune de ces $n_{init}$ initialisations, cela revient à engendrer la composante tensorielle initiale suivante :

$$X_{j,0} = \overset{3}{\underset{i=1}{\bigotimes}}\, v_{j,0} = v_{j,0}^{\otimes 3}.$$

Au cours de cette même étape 106, l'unité centrale de traitement 16 exécute les instructions 36 telles que pilotées par les instructions 42 pour exécuter au plus $n_{iter}$ fois à partir de chaque vecteur initial $v_{j,0}$, où $1 \leq j \leq n_{init}$, l'opération R à relation de récurrente suivante :

$$v_{j,k} = \frac{\langle T, I \otimes v_{j,k-1} \otimes v_{j,k-1} \rangle}{\left\| \langle T, I \otimes v_{j,k-1} \otimes v_{j,k-1} \rangle \right\|},$$

où $\langle , \rangle$ est le produit scalaire entre deux tenseurs dans un espace euclidien, $\| \|$ est la norme euclidienne et I est la matrice identité dont les deux dimensions sont de longueur vectorielle égale à n. On notera que ce produit scalaire entre deux tenseurs de dimensions différentes, puisque le produit tensoriel $I \otimes v_{j,k-1} \otimes v_{j,k-1}$ donne un tenseur présentant une dimension de plus que T, fournit un résultat vectoriel.

Il s'agit de la méthode de la puissance itérée appliquée à chaque vecteur initial $v_{j,0}$. En variante, la relation R pourrait être adaptée, conformément aux connaissances générales de l'homme du métier, pour réaliser une descente de gradient à pas fixes ou de préférence variables selon les applications concrètes visées.

On notera que l'opération R peut être exécutée moins de $n_{iter}$ fois pour un vecteur initial $v_{j,0}$ donné si une convergence stable est observée avant. On obtient ainsi $n_{init}$ vecteurs finaux $v_{j,f}$, c'est-à-dire $n_{init}$ composantes tensorielles finales $X_{j,f} = v_{j,f}^{\otimes 3}$.

On notera également que les équations de l'étape 106 sont simplifiées en considérant que le tenseur T est symétrique ou que la composante principale recherchée est la résultante d'un même vecteur dans toutes les dimensions du tenseur T. Il s'agit bien d'une simplification puisque, de façon plus générale, la composante tensorielle initiale pourrait être engendrée à partir de vecteurs initiaux différents dans les N dimensions. La relation de récurrence doit alors être adaptée de façon connue en soi.

Enfin, au cours d'une dernière étape 108, l'unité centrale de traitement 16 exécute les instructions 38 telles que pilotées par les instructions 42 pour extraire la composante principale recherchée par sélection de l'une des $n_{init}$ composantes tensorielles finales $X_{j,f}$.

Cette sélection peut optionnellement mais avantageusement comporter une présélection, parmi les $n_{init}$ composantes tensorielles finales, de $n'_{init}$ composantes tensorielles finales dont la convergence par exécution des instructions 36 présente une variation inférieure à un seuil prédéterminé sur un nombre prédéterminé de dernières itérations. Selon une implémentation approchée et rapide, il peut être tout simplement vérifié si $\|\langle v_{j,f-n'}, v_{j,f} \rangle\| \geq 1 - \varepsilon$, avec $f \geq n' + 1$, où n' est petit devant $n_{iter}$, par exemple de l'ordre de $n_{iter}/10$ ou $n_{iter}/100$, et $\varepsilon$ est petit devant 1. L'opérateur $\langle , \rangle$ représente cette fois-ci le produit scalaire entre deux vecteurs. On notera que la norme de ce produit scalaire est toujours inférieure ou égale à 1 puisque les vecteurs considérés sont eux-mêmes normalisés par construction pour l'application de la méthode de la puissance itérée.

Sans présélection, la composante principale finale $X_f$ peut être sélectionnée sur un critère de maximum de vraisemblance, par exemple selon le calcul suivant :

$$ X_f = \operatorname*{Arg\,Max}_{1 \leq j \leq n_{init}} \langle T, X_{j,f} \rangle. $$

On notera que la fonction « Arg Max » du produit scalaire $\langle T, X_{j,f} \rangle$ a bien un sens puisque ce produit scalaire entre deux tenseurs de mêmes dimensions donne un résultat scalaire.

Avec présélection, la composante principale finale $X_f$ peut être sélectionnée sur le même critère de maximum de vraisemblance mais appliqué aux seules $n'_{init}$ composantes tensorielles finales présélectionnées, ce qui est plus rapide.

Dans tous les cas, la composante principale extraite $X_f$ constitue un signal significatif de la représentation d'images *a priori* bruitée enregistrée sous la forme du tenseur T. Elle peut par la suite être utilisée pour représenter une information caractéristique et pertinente de cette représentation d'images, pour réduire la dimension des données ou pour réaliser un débruitage.

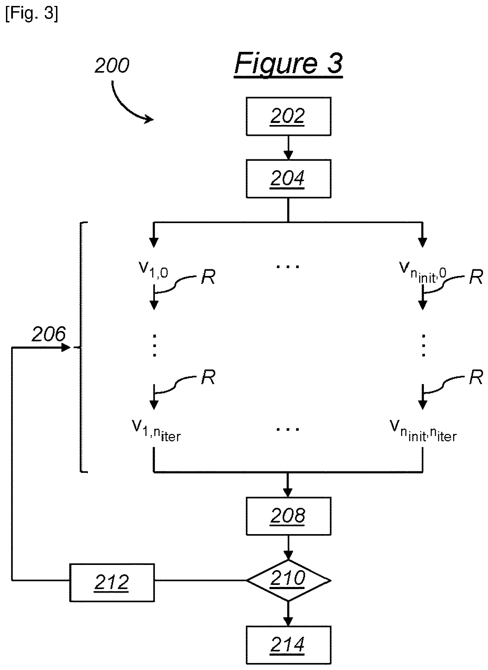

En référence à la figure 3, un procédé 200 de traitement d'images par extraction d'au moins une composante principale d'une représentation d'images à N dimensions, où $N \geq 3$, mis en œuvre par le dispositif 10 de la figure 1 grâce à l'exécution des instructions 30 à 42 va à présent être détaillé selon un deuxième mode de réalisation. Ce deuxième mode de réalisation diffère du précédent en ce que plusieurs composantes principales sont à extraire. Comme précédemment, il est supposé que N = 3 et que $n_1 = n_2 = n_3 = n$.

Les étapes 202, 204, 206 et 208 sont identiques aux étapes 102, 104, 106 et 108. Mais suite à ces étapes, au cours d'une étape de test 210, l'unité centrale de traitement 16 exécute les instructions 42 pour déterminer si le nombre de composantes principales souhaité est atteint.

Si ce n'est pas le cas, au cours d'une étape 212, l'unité centrale de traitement 16 exécute les instructions 40 telles que pilotées par les instructions 42 pour une mise à jour du tenseur T par soustraction de la composante principale $X_f$ précédemment sélectionnée, c'est-à-dire à la dernière exécution de l'étape 208, affectée d'un coefficient relatif à un produit scalaire entre elle et le tenseur. Cette mise à jour prend par exemple la forme suivante :

$$ T \leftarrow T - \langle T, X_f \rangle X_f. $$

Suite à l'étape 212, le procédé 200 reprend à l'étape 206 pour l'extraction d'une nouvelle composante principale à partir du tenseur T mis à jour.

Lorsqu'à l'étape de test 210 il est déterminé que le nombre de composantes principales souhaité est atteint, le procédé 200 passe à une dernière étape 214 de fourniture de ces composantes principales qui ont toutes été sélectionnées aux exécutions successives de l'étape 208.

Ces composantes principales extraites constituent un signal significatif de la représentation d'images *a priori* bruitée enregistrée sous la forme du tenseur T. Elles peuvent par la suite être utilisées pour représenter une ou plusieurs informations caractéristiques et pertinentes de cette représentation d'images, pour réduire la dimension des données ou pour réaliser un débruitage.

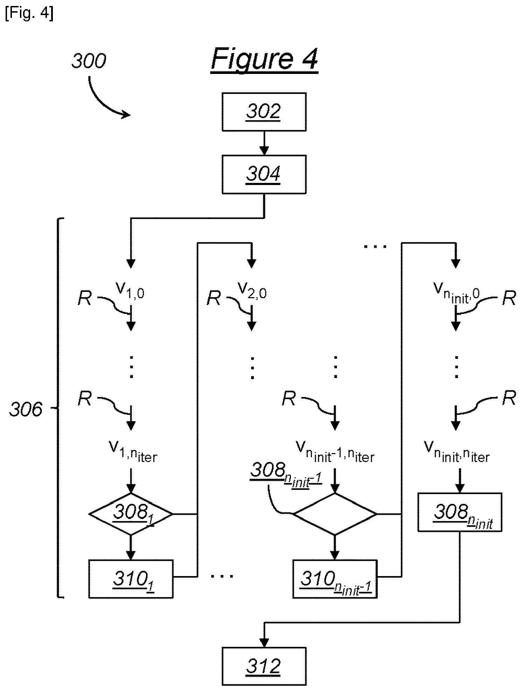

En référence à la figure 4, un procédé 300 de traitement d'images par extraction d'au moins une composante principale d'une représentation d'images à N dimensions, où $N \geq 3$, mis en œuvre par le dispositif 10 de la figure 1 grâce à l'exécution des instructions 30 à 42 va à présent être détaillé selon un troisième mode de réalisation. Ce troisième mode de réalisation constitue une variante astucieuse du précédent. Comme précédemment, plusieurs composantes principales sont à extraire et il est supposé que $N = 3$ et que $n_1 = n_2 = n_3 = n$.

Les étapes 302 et 304 sont identiques aux étapes 202 et 204, elles-mêmes identiques aux étapes 102 et 104. En revanche, l'étape 306 diffère de l'étape 206 et donc de l'étape 106 en ce qu'elle inclut la présélection et la mise à jour tensorielle éventuelle définies précédemment à chacune des $n_{init}$ exécutions de la méthode de convergence par itérations successives.

Plus précisément, au cours de cette étape 306, l'unité centrale de traitement 16 exécute tout d'abord les instructions 34 telles que pilotées par les instructions 42 pour engendrer aléatoirement $n_{init}$ vecteurs initiaux $v_{j,0}$, où $1 \leq j \leq n_{init}$. Pour chacune de ces $n_{init}$ initialisations, cela revient à engendrer la composante tensorielle suivante :

$$X_{j,0} = \overset{3}{\underset{i=1}{\otimes}} v_{j,0} = v_{j,0}{}^{\otimes 3}.$$

Au cours de cette même étape 306, l'unité centrale de traitement 16 exécute les instructions 36 telles que pilotées par les instructions 42 pour exécuter au plus $n_{iter}$ fois, à partir du vecteur initial $v_{1,0}$, l'opération R à relation de récurrente suivante :

$$v_{1,k} = \frac{\langle T, I \otimes v_{1,k-1} \otimes v_{1,k-1} \rangle}{\left\| \langle T, I \otimes v_{1,k-1} \otimes v_{1,k-1} \rangle \right\|}.$$

Il s'agit de la méthode de la puissance itérée appliquée au vecteur initial $v_{1,0}$. En variante, la relation R pourrait être adaptée, conformément aux connaissances générales de l'homme du métier, pour réaliser une descente de gradient à pas fixes ou de préférence variables selon les applications concrètes visées.

On notera que l'opération R peut être exécutée moins de $n_{iter}$ fois si une convergence stable est observée avant. On obtient ainsi un vecteur final $v_{1,f}$, c'est-à-dire une composante tensorielle finale $X_{1,f} = v_{1,f}{}^{\otimes 3}$.

On notera également que les équations de l'étape 306 sont, comme pour l'étape 106, simplifiées en considérant que le tenseur T est symétrique ou que la composante principale recherchée est la résultante d'un même vecteur dans toutes les dimensions du tenseur T. De façon plus générale, la composante tensorielle initiale pourrait être engendrée à partir de vecteurs initiaux différents dans les N dimensions. La relation de récurrence doit alors être adaptée de façon connue en soi.

Une fois cette composante tensorielle finale $X_{1,f}$ obtenue, elle est présélectionnée au cours d'une sous-étape $308_1$ de l'étape 306 si et seulement si la convergence qui a permis de l'obtenir par exécution de la méthode de convergence par itérations successives présente une variation inférieure à un seuil prédéterminé sur un nombre prédéterminé de dernières itérations. Selon l'implémentation approchée et rapide définie précédemment, il peut être tout simplement vérifié si $\|v_{1,f-n'}, v_{1,f}\| \geq 1 - \varepsilon$, avec $f \geq n' + 1$, où $n'$ est petit devant niter, par exemple de l'ordre de niter/10 ou niter/100, et $\varepsilon$ est petit devant 1.

Si la composante tensorielle finale $X_{1,f}$ est présélectionnée, le procédé 300 passe à une sous-étape $310_1$ de l'étape 306 consistant à mettre à jour le tenseur T par soustraction de la composante tensorielle finale présélectionnée affectée d'un coefficient relatif à un produit scalaire entre elle et le tenseur, c'est-à-dire par exemple :

$$T \leftarrow T - \langle T, X_{1,f} \rangle X_{1,f}.$$

Le procédé 300 passe ensuite à une deuxième exécution de la méthode de convergence par itérations successives à partir du vecteur initial $v_{2,0}$.

Si la composante tensorielle finale $X_{1,f}$ n'est pas présélectionnée au cours de la sous-étape $308_1$ de l'étape 306, le procédé 300 passe directement à la deuxième exécution de la méthode de convergence par itérations successives à partir du vecteur initial $v_{2,0}$, sans mise à jour du tenseur T.

D'une façon générale, à chaque j-ième exécution de la méthode de convergence par itérations successives à l'aide des instructions 36 telles que pilotées par les instructions 42, comme pour la première exécution qui a été détaillée précédemment à titre d'exemple :

- une fois la composante tensorielle finale $X_{j,f}$ obtenue, elle est présélectionnée au cours d'une sous-étape $308_j$ de l'étape 306 si et seulement si la convergence qui a permis de l'obtenir par exécution de la méthode de convergence par itérations successives présente une variation inférieure à au seuil prédéterminé sur le nombre prédéterminé de dernières itérations, et

- si la composante tensorielle finale $X_{j,f}$ est présélectionnée, le procédé 300 passe à une sous-étape $310_j$ de l'étape 306 consistant à mettre à jour le tenseur T selon la formule $T \leftarrow T - \langle T, X_{j,f} \rangle X_{j,f}$, puis à la j+1-ième exécution de la méthode de convergence par itérations successives,

- si la composante tensorielle finale $X_{j,f}$ n'est pas présélectionnée, le procédé 300 passe directement à la j+1-ième exécution de la méthode de convergence par itérations successives à partir du vecteur initial $v_{j+1,0}$, sans mise à jour du tenseur T.

On notera qu'à la $n_{init}$-ième et dernière exécution de la méthode de convergence par itérations successives, la présélection est exécutée mais pas nécessairement la mise à jour tensorielle qui est inutile.

A l'issue des $n_{init}$ exécutions de la méthode de convergence par itérations successives, et donc à l'issue de l'étape 306, l'unité centrale de traitement 16 exécute les instructions 38 telles que pilotées par les instructions 42 au cours d'une dernière étape 312 pour extraire les composantes principales recherchées par sélection de plusieurs parmi les $n'_{init}$ composantes tensorielles finales présélectionnées au cours des sous-étapes $308_1$, ..., $308_{ninit}$. Cette sélection peut se faire comme indiqué précédemment sur un critère de maximum de vraisemblance.

On remarque que le procédé 300 présente l'avantage, par rapport au procédé 200, de ne pas augmenter le nombre d'exécutions de la méthode de convergence par itérations successives proportionnellement au nombre de composantes principales recherchées. En effet, si P composantes principales sont recherchées, le procédé 200 exécute $P.n_{init}$ fois la méthode de convergence, c'est-à-dire $n_{init}$ fois pour chaque composante principale recherchée, alors que le procédé 300 ne l'exécute que $n_{init}$ fois au total. Tout au plus peut-on sensiblement augmenter le nombre $n_{init}$ à l'étape 304 pour tenir compte de cette extraction de plusieurs composantes principales. Pour autant, il a été observé que cela ne nuit pas à une bonne extraction de ces composantes principales.

Des tests ont été menés pour comparer le principe général mis en œuvre par la présente invention à des méthodes connues d'extraction de composante principale.

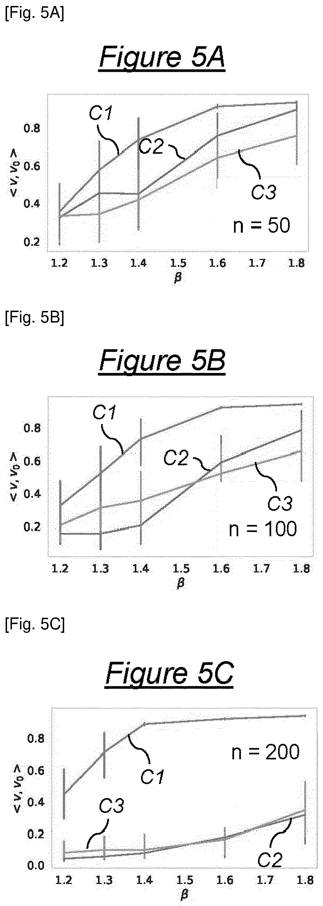

Ainsi, la figure 5A compare trois courbes de convergences de trois méthodes d'extraction de composante principale. Ces trois courbes ont été obtenues sur la base d'un tenseur T à 3 dimensions de longueur vectorielle commune n = 50 conçu par simulation, constitué d'une composante principale prédéterminée et de bruit avec un rapport signal sur bruit paramétrable β. L'axe des abscisses exprime les variations du rapport signal sur bruit β. L'axe des ordonnées exprime une corrélation entre la composante principale extraite (représentée par son vecteur générateur v, i.e. tel que $X = v \otimes v \otimes v$ ) et celle qui a été prédéterminée (représentée par son vecteur générateur $v_0$). La courbe C1 représente ce qui est obtenu par exécution du procédé 100 de traitement d'images selon la présente invention sur la base d'une méthode de la puissance itérée telle que détaillée précédemment. La courbe C2 représente ce qui est obtenu par exécution d'un procédé de traitement d'images connu sur la base d'une méthode d'extraction de composante principale par dépliage. La courbe C3 représente ce qui est obtenu par exécution d'un procédé de traitement d'images connu sur la base d'une méthode d'extraction de composante principale par homotopie.

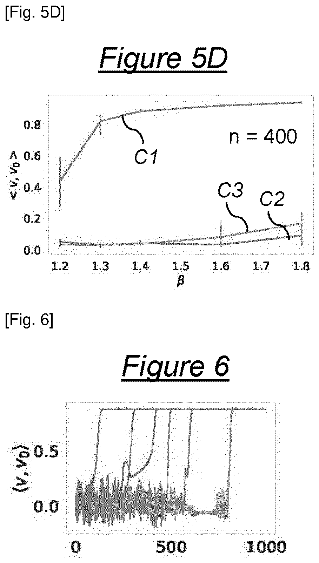

La figure 5B illustre les trois courbes C1, C2 et C3 obtenues sur la base d'un tenseur T à 3 dimensions de longueur vectorielle commune n = 100. La figure 5C illustre les trois courbes C1, C2 et C3 obtenues sur la base d'un tenseur T à 3 dimensions de longueur vectorielle commune n = 200. La figure 5D illustre les trois courbes C1, C2 et C3 obtenues sur la base d'un tenseur T à 3 dimensions de longueur vectorielle commune n = 400.

On remarque plusieurs choses. La courbe C1 présente une convergence nettement meilleure que les deux autres, quelle que soit la valeur de n et à tous les niveaux de bruit. Elle se distingue des deux autres d'autant plus clairement que n est grand. Elle présente une convergence convenable même à faible rapport signal sur bruit et est d'autant plus robuste au bruit que n est grand.

La figure 6 illustre plusieurs courbes de convergences de plusieurs exécutions de la méthode de la puissance itérée sur six initialisations aléatoires différentes d'une même exécution de traitement d'images par extraction de composante principale selon la présente invention. L'axe des abscisses est l'axe des itérations $1 \leq k \leq n_{iter}$ avec $n_{iter}$ = 1000. L'axe des ordonnées exprime une corrélation entre la composante tensorielle en cours de convergence (représentée par son vecteur générateur v) et celle qui a été prédéterminée (représentée par son vecteur générateur $v_0$). On y voit clairement une déambulation plus ou moins longue selon l'initialisation dans l'espace des composantes tensorielles avant une convergence finalement tardive mais soudaine et systématique. D'où l'importance de l'étape de détermination du nombre $n_{iter}$ d'itérations (104, 204, 304) de telle sorte qu'il soit suffisant et notamment supérieur ou égal à une valeur V représentative de la taille du tenseur T.

Il apparaît clairement qu'un procédé de traitement d'images par extraction d'au moins une composante principale d'une représentation d'images à N dimensions, où $N \geq 3$, tel que l'un de ceux décrits précédemment permet d'assurer une convergence remarquablement améliorée moyennant un nombre suffisant d'itérations dans la méthode de convergence choisie, sans que cela ne nécessite une complexité évoluant exponentiellement avec la taille des données. En particulier, un nouveau mécanisme de convergence, dans lequel le bruit joue un rôle important dans la récupération du signal, est enclenché avec une probabilité proche de 1, moyennant un nombre polynomial d'itérations, l'utilisation d'une méthode de convergence adaptée telle que la méthode de la puissance itérée ou de descente de gradient à pas variable, l'abandon d'un critère d'arrêt ne se basant que sur la variation de la dernière itération (pour permettre une déambulation dans l'espace des composantes tensorielles) et un nombre polynomial d'exécutions de ladite méthode de convergence sur autant d'initialisations aléatoires.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, les instructions de programme d'ordinateur décrites précédemment ont été présentées comme incluses dans un unique programme d'ordinateur. Mais elles peuvent plus généralement être regroupées ou séparées selon toutes les combinaisons possibles en un ou plusieurs logiciels. Leur distinction est en outre purement fonctionnelle. Enfin, leurs fonctions pourraient aussi être au moins en partie micro programmées ou micro câblées dans des circuits intégrés dédiés. Ainsi, en variante, le dispositif informatique 14 mettant en œuvre l'unité de traitement 16 pourrait être remplacé par un dispositif électronique composé de circuits numériques pour la réalisation des mêmes actions.

En particulier également, dans les exemples de réalisation donnés précédemment, il a été supposé que $N = 3$ et que $n_1 = n_2 = n_3 = n$. Mais en règle générale, N peut être supérieur à 3 et surtout les longueurs vectorielles des dimensions tensorielles respectives ne sont pas nécessairement égales, ce qui est souvent le cas dans des données de séquences temporelles d'images (vidéos). Par exemple, pour $N = 3$, on peut avoir $n_1 \neq n_2 \neq n_3$. Dans ce cas, il suffit d'adapter les instructions 34 et 36 des étapes 106, 206 et 306 pour :

- engendrer $n_{init}$ vecteurs initiaux $v_{a_{j,0}}$ de longueur vectorielle $n_1$, où $1 \leq j \leq n_{init}$, $n_{init}$ vecteurs initiaux $v_{b_{j,0}}$ de longueur vectorielle $n_2$, où $1 \leq j \leq n_{init}$, et $n_{init}$ vecteurs initiaux $v_{c_{j,0}}$ de longueur vectorielle $n_3$, où $1 \leq j \leq n_{init}$, de manière à engendrer $n_{init}$ composantes tensorielles initiales $X_{j,0} = v_{a_{j,0}} \otimes v_{b_{j,0}} \otimes v_{c_{j,0}}$,

- exécuter la méthode de la puissance itérée à l'aide de la relation de récurrence suivante pour $1 \leq j \leq n_{init}$ et $1 \leq k \leq n_{iter}$ :

$$\begin{cases} v_{a_{j,k}} = \dfrac{\langle T, I \otimes v_{b_{j,k-1}} \otimes v_{c_{j,k-1}} \rangle}{\left\| \langle T, I \otimes v_{b_{j,k-1}} \otimes v_{c_{j,k-1}} \rangle \right\|}, \\[2ex] v_{b_{j,k}} = \dfrac{\langle T, I \otimes v_{a_{j,k-1}} \otimes v_{c_{j,k-1}} \rangle}{\left\| \langle T, I \otimes v_{a_{j,k-1}} \otimes v_{c_{j,k-1}} \rangle \right\|}, \\[2ex] v_{c_{j,k}} = \dfrac{\langle T, I \otimes v_{a_{j,k-1}} \otimes v_{b_{j,k-1}} \rangle}{\left\| \langle T, I \otimes v_{a_{j,k-1}} \otimes v_{b_{j,k-1}} \rangle \right\|}. \end{cases}$$

En reprenant les notations précédentes, les $n_{init}$ composantes tensorielles finales sont $X_{j,f} = v_{a_{j,f}} \otimes v_{b_{j,f}} \otimes v_{c_{j,f}}$, et la sélection d'une ou plusieurs composantes principales parmi ces composantes tensorielles finales, avec ou sans présélection, avec ou sans mise à jour tensorielle, se fait de la même façon sur un critère de maximum de vraisemblance.

D'une façon générale, dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

**Revendications**

1. Procédé (100 ; 200 ; 300) de traitement d'images par extraction d'au moins une composante principale d'une représentation d'images à N dimensions, où $N \geq 3$, comportant :

   - un enregistrement (102 ; 202 ; 302) de la représentation d'images sous la forme d'un tenseur à N dimensions présentant des longueurs vectorielles $n_i$, où $1 \leq i \leq N$, dans ses N dimensions respectives ;
   - une génération aléatoire (106 ; 206 ; 306) de $n_{init}$ composantes tensorielles initiales, où $n_{init} \geq 2$ ;
   - $n_{init}$ exécutions (106; 206; 306) d'une méthode de convergence par itérations successives sur le tenseur en partant respectivement des $n_{init}$ composantes tensorielles initiales et en appliquant au moins $n_{iter}$ itérations, où $n_{iter} \geq 2$, pour l'obtention par convergence de $n_{init}$ composantes tensorielles finales ;
   - une extraction (108 ; 208 ; 308₁, ..., 308ₙᵢₙᵢₜ, 312) de ladite au moins une composante principale par sélection de l'une des $n_{init}$ composantes tensorielles finales ;

   **caractérisé en ce qu'**il comporte en outre :

   - une analyse (104 ; 204 ; 304) des dimensions du tenseur pour obtenir une valeur V représentative de sa taille à partir des N longueurs vectorielles $n_i$ ;
   - une détermination (104 ; 204 ; 304) du nombre $n_{iter}$ d'itérations de telle sorte qu'il soit supérieur ou égal à V et soit polynomial en V.

2. Procédé (100; 200; 300) de traitement d'images selon la revendication 1, comportant en outre une détermination (104 ; 204 ; 304) du nombre $n_{init}$ d'exécutions de telle sorte qu'il soit supérieur ou égal à V et soit polynomial en V.

3. Procédé (100 ; 200 ; 300) de traitement d'images selon la revendication 2, dans lequel

$$V = \max_i(n_i)$$ de sorte que :

- $n_{iter} \geq \max_i(n_i)$ et est polynomial en $\max_i(n_i)$ ;

- $n_{init} \geq \max_i(n_i)$ et est polynomial en $\max_i(n_i)$.

4. Procédé (100 ; 200 ; 300) de traitement d'images selon la revendication 3, dans lequel :

- $n_{iter} = \alpha_{iter} \times \max_i(n_i)$, où $\alpha_{iter}$ est un nombre entier strictement positif ;

- $n_{init} = \alpha_{init} \times \max_i(n_i)$, où $\alpha_{init}$ est un nombre entier strictement positif.

5. Procédé (100 ; 200 ; 300) de traitement d'images selon la revendication 3 ou 4, dans lequel

$$n_{init} \leq 10 \times \max_i(n_i).$$

6. Procédé (100 ; 200 ; 300) de traitement d'images selon l'une quelconque des revendications 1 à 5, dans lequel la sélection (108 ; 208 ; $308_1$, ..., $308_{ninit}$, 312) se fait sur un critère de maximum de vraisemblance et comporte une présélection, parmi les $n_{init}$ composantes tensorielles finales, de $n'_{init}$ composantes tensorielles finales dont la convergence par exécution de la méthode de convergence par itérations successives présente une variation inférieure à un seuil prédéterminé sur un nombre prédéterminé de dernières itérations.

7. Procédé (300) de traitement d'images selon l'une quelconque des revendications 1 à 6, dans lequel plusieurs composantes principales recherchées sont extraites de la façon suivante :

- à chacune des $n_{init}$ exécutions (306) de la méthode de convergence par itérations successives :

• présélection ($308_1$, ..., $308_{ninit}$) de la composante tensorielle finale si et seulement si la convergence qui a permis de l'obtenir par exécution de la méthode de convergence par itérations successives présente une variation inférieure à un seuil prédéterminé sur un nombre prédéterminé de dernières itérations,

• mise à jour ($310_1$, ..., $310_{ninit-1}$) du tenseur par soustraction de la composante tensorielle finale présélectionnée affectée d'un coefficient relatif à un produit scalaire entre elle et le tenseur, ou maintien du tenseur tel quel si la composante tensorielle finale n'est pas présélectionnée ;

- à l'issue des $n_{init}$ exécutions (306) de la méthode de convergence par itérations successives, extraction (312) des composantes principales recherchées par sélection de plusieurs parmi les composantes tensorielles finales présélectionnées.

8. Procédé (100 ; 200 ; 300) de traitement d'images selon l'une quelconque des revendications 1 à 7, dans lequel la méthode de convergence par itérations successives est l'une de l'ensemble constitué d'une méthode de la puissance itérée et d'une méthode de descente de gradient à pas variable.

9. Programme d'ordinateur (20) téléchargeable depuis un réseau de communication et/ou enregistré sur un support (18) lisible par ordinateur et/ou exécutable par un processeur (16), **caractérisé en ce qu'**il comprend des instructions (30, 32, 34, 36, 38, 40, 42) pour l'exécution des étapes d'un procédé de traitement d'images selon l'une quelconque des revendications 1 à 8, lorsque ledit programme (20) est exécuté sur un ordinateur (14).

10. Dispositif (10) de traitement d'images par extraction d'au moins une composante principale d'une représentation d'images à N dimensions, où $N \geq 3$, comportant :

- des moyens (16, 30) d'acquisition et d'enregistrement de la représentation d'images sous la forme d'un tenseur à N dimensions présentant des longueurs vectorielles $n_i$, où $1 \leq i \leq N$, dans ses N dimensions respectives ;
- un processeur (16) programmé pour :

• engendrer aléatoirement (34) $n_{init}$ composantes tensorielles initiales, où $n_{init} \geq 2$,
• exécuter $n_{init}$ fois une méthode (36) de convergence par itérations successives sur le tenseur en partant respectivement des $n_{init}$ composantes tensorielles initiales et en appliquant au moins $n_{iter}$ itérations, où $n_{iter} \geq 2$, pour l'obtention par convergence de $n_{init}$ composantes tensorielles finales,
• extraire (38) ladite au moins une composante principale par sélection de l'une des $n_{init}$ composantes tensorielles finales ;

**caractérisé en ce que** le processeur (16) est en outre programmé pour :

- analyser (32) les dimensions du tenseur pour obtenir une valeur V représentative de sa taille à partir des N longueurs vectorielles ni ;
- déterminer (32) le nombre $n_{iter}$ d'itérations de telle sorte qu'il soit supérieur ou égal à V et soit polynomial en V.

[Fig. 1]

## Figure 1

[Fig. 2]

Figure 2

[Fig. 3]

## _Figure 3_

_200_

202

204

$V_{1,0}$  $R$

$\cdots$

$V_{n_{init},0}$  $R$

206

$R$

$R$

$V_{1,n_{iter}}$

$\cdots$

$V_{n_{init},n_{iter}}$

208

212

210

214

[Fig. 4]

## _Figure 4_

[Fig. 5A]

Figure 5A

[Fig. 5B]

Figure 5B

[Fig. 5C]

Figure 5C

[Fig. 5D]

## Figure 5D

[Fig. 6]

## Figure 6

**RAPPORT DE RECHERCHE EUROPEENNE**

Europäisches Patentamt
European Patent Office
Office européen des brevets

Numéro de la demande

EP 22 19 2934

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MARTIN-HERRERO JULIO ET AL: "Tensor-Driven Hyperspectral Denoising: A Strong Link for Classification Chains?", 2010 20TH INTERNATIONAL CONFERENCE ON PATTERN RECOGNITION (ICPR 2010) : ISTANBUL, TURKEY, 23 - 26 AUGUST 2010 , 1 août 2010 (2010-08-01), pages 2820-2823, XP055902924, Piscataway, NJ, USA DOI: 10.1109/ICPR.2010.691 ISBN: 978-1-4244-7542-1 Extrait de l'Internet: URL:https://ieeexplore.ieee.org/stampPDF/g etPDF.jsp?tp=&arnumber=5597053&ref=aHR0cHM 6Ly9pZWVleHBsb3JlLmllZWUub3JnL2Fic3RyYWN0L 2RvY3VtZW50LzU1OTcwNTM/Y2FzYV90b2tlbj03OXJ uR0VsWVBEd0FBQUFBOmFNNEppYOTg5YUxwWlp0UkJQU E5iTHFaVEg5SWZjRkItb1odkM4dTk2dVpyRzJ3Mmt mUmpPOFZuZmFERTJ1cC1PV1FxS0FBX2JR [extrait le 2022-03-17] * le document en entier * ----- | 1-10 | INV. G06T5/00 |
| A | GÉRARD BEN AROUS ET AL: "The Landscape of the Spiked Tensor Model", COMMUNICATIONS ON PURE AND APPLIED MATHEMATICS, JOHN WILEY & SONS, INC, HOBOKEN, USA, vol. 72, no. 11, 13 août 2019 (2019-08-13) , pages 2282-2330, XP071084673, ISSN: 0010-3640, DOI: 10.1002/CPA.21861 * le document en entier * ----- -/-- | 1-10 | DOMAINES TECHNIQUES RECHERCHES (IPC) G06T |

Le présent rapport a été établi pour toutes les revendications

| Lieu de la recherche | Date d'achèvement de la recherche | Examinateur |
|---|---|---|
| Munich | 3 mars 2023 | Blaszczyk, Marek |

EPO FORM 1503 03.82 (P04C02)

page 1 de 2

**RAPPORT DE RECHERCHE EUROPEENNE**

Europäisches Patentamt
European Patent Office
Office européen des brevets

Numéro de la demande

EP 22 19 2934

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WEI-KUO CHEN ET AL: "Phase transition in random tensors with multiple independent spikes", ARXIV.ORG, CORNELL UNIVERSITY LIBRARY, 201 OLIN LIBRARY CORNELL UNIVERSITY ITHACA, NY 14853, 9 novembre 2020 (2020-11-09), XP081977009, DOI: 10.1214/20-AAP1636 * le document en entier * ----- | 1-10 | |
| A | LOGAN ENGSTROM ET AL: "Exploring the Landscape of Spatial Robustness", ARXIV.ORG, CORNELL UNIVERSITY LIBRARY, 201 OLIN LIBRARY CORNELL UNIVERSITY ITHACA, NY 14853, 7 décembre 2017 (2017-12-07), XP081490793, * le document en entier * ----- | 1-10 | |
| T | Ouerfelli Mohamed ET AL: "Selective Multiple Power Iteration: from Tensor PCA to gradient-based exploration of landscapes", , 22 décembre 2021 (2021-12-22), XP055902498, Extrait de l'Internet: URL:https://arxiv.org/pdf/2112.12306.pdf [extrait le 2022-03-17] * le document en entier * ----- | 1-10 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 3 mars 2023 | Blaszczyk, Marek |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SUN et al.** Opportunities in tensorial data analytics for chemical and biological manufacturing processes. *Computer & Chemical Engineering,* 05 Décembre 2020, vol. 143
- **ANANDKUMAR et al.** Tensor decompositions for learning latent variable models. *Journal of Machine Learning Research,* 2014, vol. 15, 2773-2832
- **WANG et al.** CPAC-Conv: CP-decomposition to approximately compress convolutional layers in deep learning. *arXiv:2005.13746v1,* 28 Mai 2020
- **ALEX et al.** Multilinear analysis of image ensembles: TensorFaces. *Proceedings of European Conférence on Computer Vision,* 29 Avril 2002, 447-460
- **DECURNINGE et al.** Tensor-based modulation for unsourced massive random access. *IEEE Wireless Communications Letters,* 11 Novembre 2020, vol. 10 (3), 552-556
- **WANG ; ANANDKUMAR.** Online and differentially-private tensor decomposition. *Proceedings of 29th Conférence on Neural Information Processing Systems, Barcelone (ES),* 15 Décembre 2016